# EUROPÄISCHE PATENTSCHRIFT

(11) **EP 0 749 553 B1**
(45) Veröffentlichungstag und Bekanntmachung des Hinweises auf die Patenterteilung: **12.04.2000**
(21) Anmeldenummer: 96900073.6
(22) Anmeldetag: 08.01.1996
(51) Int. Cl.: F23G 5/16, F23G 5/30

(54) **VERFAHREN ZUM VERBRENNEN VON ABFALLMATERIAL UNTER GEWINNUNG VON THERMISCHER ENERGIE**
METHOD OF BURNING WASTE MATERIAL TO RECOVER THERMAL ENERGY
PROCEDE D'INCINERATION DE DECHETS AVEC RECUPERATION D'ENERGIE THERMIQUE

(30) Priorität: 10.01.1995 CH 5295
(43) Veröffentlichungstag der Anmeldung: 27.12.1996
(73) Patentinhaber: Von Roll Umwelttechnik AG, 8005 Zürich (CH)
(72) Erfinder: MÜLLER, Patrick, CH-8201 Schaffhausen (CH); RÜEGG, Hans, CH-5610 Wohlen (CH)
(74) Vertreter: Patentanwälte Schaad, Balass, Menzl & Partner AG
(86) Internationale Anmeldenummer: CH9600006
(87) Internationale Veröffentlichungsnummer: WO9621825

(56) Entgegenhaltungen:
- EP-A- 0 610 114
- WO-A-87/01790
- WO-A-88/05144
- WO-A-95/00804
- DE-A- 3 307 848

## Beschreibung

Die Erfindung betrifft ein Verfahren zum Verbrennen von Abfallmaterial unter Gewinnung von thermischer Energie gemäss dem Oberbegriff des Anspruches 1.

Es sind Verfahren und Abfallverbrennungsanlagen dieser Art bekannt, bei welchen die Feuerung, z.B. eine Rostfeuerung, mit einer stöchiometrisch zur vollständigen Verbrennung der Abfallmaterialien benötigten Luftmenge oder sogar mit einem Luftüberschuss betrieben wird.

Infolge räumlicher Ungleichverteilungen dieser Primärluftzufuhr ist es fast unvermeidlich, die Feuerung mit einem relativ grossen Sauerstoffüberschuss zu betreiben. Nur so kann ein vollständiger Ausbrand der in die Feuerung eingebrachten Abfallmaterialien sichergestellt werden. So sollte z.B. die Schlacke aus einer Rostfeuerung für Abfallstoffe nur noch 3 Gew.% flüchtige Substanzen (gemessen als Glühverlust bei 550°C) enthalten.

Auch rauchgasseitig verlässt ein Teil der Substanzen die Feuerung unverbrannt. Diese unverbrannten Gase und Feststoffpartikel entstehen ebenfalls infolge räumlicher Ungleichverteilungen der Primärluftzufuhr und mangelnder Rauchgasdurchmischung im Feuerungsraum und verlassen den Feuerungsraum in Form von Strähnen. Diese Substanzen müssen in einer Nachbrennkammer nachverbrannt werden. Bis jetzt war es üblich, zur Unterstützung der Nachverbrennung und insbesondere zur Verbesserung der Quervermischung der Rauchgase zusätzliche Verbrennungsluft, sogenannte Sekundärluft in die Nachbrennkammer einzubringen.

Infolge schlechter Quervermischung muss, um den vom Gesetz vorgeschriebenen Ausbrand der Rauchgase zu gewährleisten, eine verhältnismässig lange Verweilzeit der Rauchgase in der Nachbrennkammer sichergestellt und eine relativ grosse Sekundärluftmenge zugemischt werden. Dies resultiert in einem sehr grossen Bauvolumen der Nachbrennkammer und einem vergrösserten Bauvolumen der nachgeschalteten Apparate, wie z.B. Kessel zur Wärmerückgewinnung und Gasreinigungseinrichtungen, da der Gesamtvolumenstrom durch die Zugabe von Sekundärluft vergrössert wird. Auch verkleinert dies den Kesselwirkungsgrad und damit den erreichbaren elektrischen Wirkungsgrad der Verbrennungsanlage, da eine vergrösserte Rauchgasmenge auch grössere Abgas-Wärmeverluste bedeutet. Für den Kessel ergibt sich ebenfalls ein sehr grosses Bauvolumen, da der Wärmeübergang vom heissen Rauchgas an die Kühlflächen insbesondere im Strahlungsteil des Kessels verhältnismässig schlecht ist.

Ein schwerwiegendes Problem bei der Verbrennung von Abfallstoffen sind zudem die korrosiven Rauchgase, die zu Korrosionsproblemen im Kesselteil führen. Diese treten bevorzugt an den heissesten Wärmeübertragungsflächen, d.h. an den Überhitzerheizflächen auf. Dabei gibt es zwei hauptsächliche Mechanismen: Der eine ist die direkte Hochtemperaturkorrosion der Wärmeübertragungsflächen durch korrosive Substanzen im Rauchgas; der andere die Belagsbildung auf den Wärmeübertragungsflächen durch klebrige, korrosive Substanzen enthaltende Flugasche aus der Feuerung mit starker Korrosion unter diesen Belägen. Diese starken Korrosionserscheinungen an heissen Wärmeübertragungsflächen beschränken die erreichbaren Dampftemperaturen und damit, falls der Dampf zur Stromerzeugung genutzt wird, den elektrischen Wirkungsgrad der Verbrennungsanlage. Zudem führen sie zu periodischen Stillständen der Anlage und aufwendigen Kesselrevisionen mit grossem Aufwand zur Entfernung der Beläge auf den Wärmeübertragungsflächen.

Ein weiteres Problem bei der Verbrennung von Materialien ist die Entstehung von Stickoxiden. Diese können aus Gründen des Umweltschutzes nicht frei an die Umgebung abgegeben werden. Es sind bereits mehrere Verfahren bekannt, so z.B. das SNCR-Verfahren (Selective Noncatalytic Reduction Process), siehe US-PS 3,970,739, bei welchen Stickoxide in Rauchgasen durch Einsprühen einer Ammoniaklösung oder anderer geeigneter Reduktionsmittel, in Gegenwart des ohnehin vorhandenen Sauerstoffs, zu Stickstoff reduziert werden. Das Ammoniak wird dazu üblicherweise an geeigneter Stelle in den Rauchgasstrom eingeleitet. Dabei spielt die Rauchgastemperatur an der Einleitstelle eine grosse Rolle. Sie muss zwischen 700°C und 1100°C liegen. Bei zu niedriger Rauchgastemperatur wird ein grosser Ammoniaküberschuss benötigt. Das nichtreagierte Ammoniak im Rauchgas wird als Schlupf bezeichnet und stellt eine Umweltbelastung dar. Bei zu hoher Temperatur verbrennt ein Teil des Ammoniaks. In beiden Fällen ist die benötigte Ammoniakmenge unnötig hoch. Entlang des Rauchgasweges durch Nachbrennkammer und Kessel nimmt die Temperatur der Rauchgase kontinuierlich ab. Das Ammoniak wird an der Stelle optimaler Rauchgastemperatur eingeleitet. Dabei stellt sich jedoch das Problem, dass das Rauchgastemperaturprofil vom Betriebszustand der Anlage und vom verbrannten Abfallmaterial abhängt. Das bedeutet, dass auch die Lage der optimalen Einleitstelle vom Betriebszustand der Feuerung abhängt.

Aus der WO-A-95/00804 ist es bekannt, einer Verbrennung von Feststoffen in einer Verbrennungskammer zwei aufeinanderfolgende Nachverbrennungen nachzuschalten. Dabei findet die erste Nachverbrennung unter Zuführung einer stöchiometrischen Menge von Sekundärluft in einem Wirbelschichtreaktor in Form eines Steigrohres statt. Dem Wirbelschichtreaktor ist ein Zyklon nachgeschaltet, in welchem die aus der Wirbelschicht ausgetragenen Feststoffe vom Rauchgas abgetrennt werden. Die Feststoffe werden danach erneut in die Wirbelschicht zurückgeführt, wobei mindestens ein Teil der Feststoffe über einen externen Fliessbettkühler zurück in die Wirbelschicht geleitet wird. Die zweite Nachverbrennung findet in dem dem Steigrohr nachgeschalteten Zyklon statt. Dies bedeutet einen weiteren, unkontrolierbaren Temperaturanstieg in der zweiten Stufe der Nachverbrennung. Eine Regulierung der Temperatur bei dieser Nachverbrennung im Zyklon ist nicht möglich.

Der vorliegenden Erfindung liegt die Aufgabe zugrunde, ein effizienteres Verfahren der eingangs genannten Art vorzuschlagen, das eine Beherrschung des Temperaturprofils erlaubt.

Diese Aufgabe wird erfindungsgemäss durch die im Kennzeichen des Anspruches 1 angegebenen Merkmale gelöst.

Eine Verwendung einer zirkulierenden Wirbelschicht zur Nachverbrennung und Reinigung von brennbaren Bestandteile enthaltenden Prozessabgasen in der Metallurgie, wo verhältnismässig wenig brennbare Gase anfallen, ist aus der DE-OS 33 07 848 bekannt. Neben dem Prozessgas als Fluidisiergas wird bei diesem Verfahren zusätzlich ein sauerstoffhaltiges Verbrennungsgas getrennt in die Wirbelschicht eingeleitet. Für eine Abfallverbrennung wäre dieses Verfahren unvorteilhaft, da sich dadurch wiederum der Rauchgasstrom mit allen negativen Folgen vergrössern würde.

Aus der WO-A-88/05144 ist es bekannt, einer Verbrennung eine zusätzliche Hilfsverbrennung nachzuschalten, die in einem Wirbelschichtreaktor unter Einspritzung zusätzlichen Brennstoffes erfolgt, um eine optimale Temperatur für eine Gasreinigung, insbesonere eine Entschwefelung, einzustellen. In diesem Reaktor findet keine Wärmeabfuhr, sondern nur die Gasreinigung statt.

Die durch die Erfindung erzielten Vorteile sind insbesondere darin zu sehen, dass der rezirkulierte Feststoff eine sehr homogene Temperaturverteilung in der Nachbrennkammer bewirkt. Dies schafft optimale und einheitliche Reaktionsbedingungen für die Nachverbrennung.

Die Erfindung bringt weitere Vorteile mit sich.

Erstens bewirkt der nun mögliche Verzicht auf Sekundär-Sauerstoffzugabe einerseits eine Verringerung des Bauvolumens, andererseits einen kleineren Abgasvolumenstrom und damit einen besseren Kessel-Wirkungsgrad, da der Abgas-Wärmeverlust kleiner wird.

Zweitens ermöglicht die zirkulierende Wirbelschicht eine sehr effiziente Kühlung der in die Nachbrennkammer eintretenden heissen Rauchgase dadurch, dass die Rauchgase in der Wirbelschicht in Kontakt mit kälteren Feststoffpartikeln gebracht werden, und erst diese Partikel dann in Kontakt mit den Wärmeübertragungsflächen gebracht werden. Infolge der hohen Effizienz des Wärmeaustausches zwischen Partikeln und Rauchgasen werden die Rauchgase nach dem Eintritt in die Nachbrennkammer schlagartig auf die in der Nachbrennkammer herrschende Mischtemperatur abgekühlt. Grossflächige Strahlungsheizflächen in der Nachbrennkammer entfallen daher. Da die Gas-Feststoff-Strömung im Wirbelbettreaktor einen viel besseren Wärmeübergang aufweist als eine Gasströmung, kann die Grösse der Wärmeübergangsflächen und damit das Bauvolumen des Kessels stark verkleinert werden.

Drittens ermöglicht die Ausgestaltung der Nachbrennkammer als zirkulierende Wirbelschicht eine Lösung der Korrosionsprobleme.

Einerseits verhindert die errosive Wirkung der Gas-Feststoff-Strömung das Entstehen von korrosiven Belägen auf den Wärmeübertragungsflächen in der Wirbelschicht. Andererseits verbinden sich in die Nachbrennkammer eingetragene klebrige Flugstäube bereits mit dem in der Nachbrennkammer zirkulierenden Feststoff bevor sie in Kontakt mit den Wärmeübertragungsflächen kommen. Der Übergang zu höheren Dampftemperaturen wird erst durch ein weiteres Merkmal der Erfindung ermöglicht: Ein Teil der Wärmeübertragungsfläche wird aus dem Rauchgasweg ausgelagert in einen externen Fliessbettkühler. Die Feststoffpartikel dienen als Zwischenmedium zur Wärmeübertragung aus der Nachbrennkammer in den Fliessbettkühler: Ein Teil des in der Nachbrennkammer zirkulierenden Feststoffes wird in den Fliessbettkühler geleitet. Der gekühlte Feststoff aus dem Fliessbettkühler wird in die Nachbrennkammer zurückgefördert, wo er Wärme aus dem Rauchgasstrom aufnimmt. Im Sinne der Erfindung werden im Fliessbettkühler, also ausserhalb des Rauchgasweges, die am stärksten von Korrosion betroffenen Wärmeübertragungsflächen angeordnet. Dies sind die heissesten Wärmeübertragungsflächen, also die Überhitzerflächen. Dadurch wird eine weitere starke Verringerung der Korrosionsrate erreicht. Der nunmehr mögliche Übergang zu höheren Dampftemperaturen verbessert den elektrischen Wirkungsgrad der Verbrennungsanlage erheblich. Gleichzeitig verringern diese Massnahmen infolge der verringerten Tendenz zu Anbackungen und Korrosion den Revisonsaufwand, und erhöhen damit die Verfügbarkeit der Anlage.

Viertens ermöglicht die Ausgestaltung der Nachbrennkammer als zirkulierende Wibelschicht eine Lösung des Problemes der Wahl der Ammoniak-Einleitstelle für die Rauchgasentstickung. Die zirkulierende Wirbelschicht zeichnet sich neben der Temperaturkonstanz auch durch ein gutes Temperaturregelverhalten aus. So kann z.B. der in den Fliessbettkühler umgeleitete Feststoffmengenstrom geregelt werden. Dies erlaubt eine Regelung des aus der Nachbrennkammer abgeführten Wärmestroms und damit eine genaue Regelung der Temperatur in der Nachbrennkammer unabhängig vom Betriebszustand der Feuerung. Dadurch kann eine feste Ammoniak-Einleitstelle gewählt werden, da das Rauchgastemperaturprofil in Nachbrennkammer und Kessel nicht mehr vom Betriebszustand der Feuerung abhängt. Dies ermöglicht zudem eine Minimierung des Ammoniakverbrauchs zur Stickoxidminderung durch Wahl einer optimalen Temperatur in der Nachbrennkammer und dies unabhängig vom Betriebszustand der Feuerung.

Die Erfindung wird nun anhand der Zeichnungen näher erläutert.

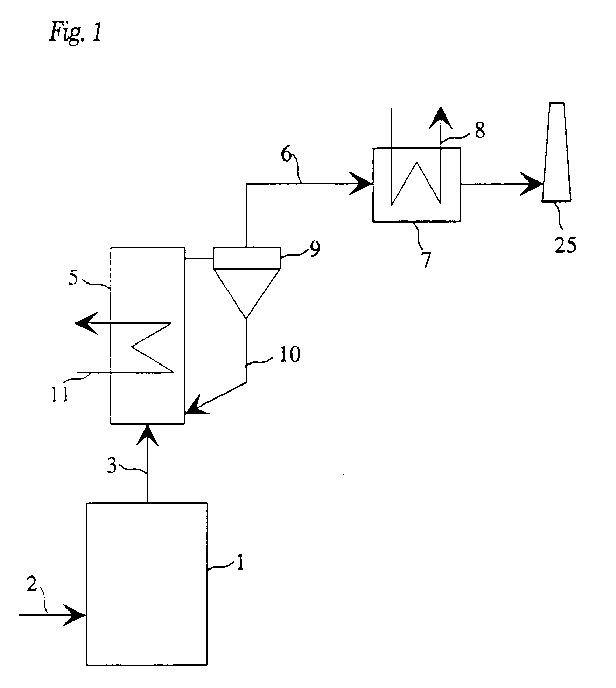

Eine bekannte Verfahren ist in Figur 1 dargestellt.

Zwei Varianten des erfindungsgemässen Verfahrens sind in den Zeichnungen 2 und 3 dargestellt und im folgenden näher beschrieben.

Es zeigen:
- Fig. 1: ein Fliesschema einer bekannten Verfahrensvariante;
- Fig. 2: ein Fliesschema einer ersten Verfahrensvariante;
- Fig. 3: ein Fliesschema einer zweiten Verfahrensvariante.

In Fig. 1 bis 3 ist mit 1 ein Feuerungsraum einer an sich bekannten Abfallverbrennungsanlage bezeichnet, in welcher das Abfallmaterial in bekannter Weise beispielsweise auf einem Rost unter Zuführung von Verbrennungsluft, auch Primärluft genannt, dem Verbrennungsprozess unterzogen wird. Die Primärluftzufuhr ist mit 2 bezeichnet. Vorzugsweise wird dabei die Feuerung mit Sauerstoff angereicherter Luft und mit einem spezifischen Sauerstoffverhältnis zwischen 1.0 und 3.0 betrieben (bezogen auf die minimal für vollständige Verbrennung benötigte Sauerstoffmenge). Die bei der Verbrennung entstehenden Gase gelangen vom Feuerungsraum in eine oberhalb von letzterem angeordnete Nachbrennkammer 5, die erfindungsgemäss als ein Wirbelschichtreaktor ausgestaltet ist und ohne zusätzliche Sauerstoffzugabe betrieben wird. Den Übergang vom Feuerungsraum 1 zur Nachbrennkammer 5 ist durch einen Pfeil 3 gekennzeichnet.

In der Nachbrennkammer 5 werden die Verbrennungsgase, die in Strähnen unverbrannte Substanzen und auch Sauerstoff enthalten, d.h. nicht homogen sind, in Kontakt mit fluidisierten Feststoffpartikeln gebracht. Als Feststoff kann Kalk, Sand u.a. verwendet werden. Eine bevorzugte Ausgestaltung besteht jedoch darin, dass das Bettmaterial der Wirbelschicht zumindest zu einem grossen Teil aus der aus der Feuerung austretenden Flugasche gebildet wird. Dies hilft zusätzliche Reststoffe zu vermeiden und damit Folgekosten des Verfahrens wie Deponiekosten zu minimieren.

Der gute Wärmeübergang der Gas-Feststoff-Strömung an die Wände der Nachbrennkammer 5 erlaubt eine effiziente Wärmeabfuhr aus der Wirbelschicht, indem die Wände als Kühlflächen ausgestaltet sind. Gegebenenfalls werden noch zusätzliche Kühlflächen 11 in der Wirbelschicht angebracht. Dabei kann die abgeführte Wärmemenge so gewählt werden, dass sich eine für die Nachverbrennung optimale Temperatur (vorzugsweise zwischen 700°C - 1100°C) in der Wirbelschicht ergibt.

Der Wirbelschichtreaktor wird mit einer derart hohen Gasgeschwindigkeit (Leerrohrgeschwindigkeit von 2m/s bis 10m/s) betrieben, dass zumindest ein Teil der Feststoffpartikel zusammen mit dem Rauchgasstrom aus der Wirbelschicht ausgetragen werden. In einem Staubabscheider 9, z.B. einem Zyklon, einem Staubfilter oder einem Elektrofilter, werden die aus der Nachbrennkammer 5 austretenden Rauchgase von dem mitausgetragenen Feststoff befreit. Der Feststoff wird über eine Leitung 10 in die Nachbrennkammer 5 zurückgeführt, so dass eine zirkulierende Wirbelschicht entsteht. Die Wirbelschicht zeichnet sich durch eine sehr gute Quervermischung der aus der Feuerung 1 kommenden Gassträhnen aus. Dadurch kann ein vollständiger Ausbrand der Rauchgase ohne zusätzliche Sauerstoffzugabe erreicht werden.

Vom Staubabscheider 9 werden die vom Feststoff befreiten Rauchgase über eine Leitung 6 zu einem konventionellen, mit Kühlflächen 8 versehenen Abhitzekessel 7 zur Wärmerückgewinnung geführt, bevor sie über nicht dargestellte Rauchgasreinigungseinrichtungen in den Kamin 25 gelangen. In diesem Abhitzekessel 7 werden die Rauchgase mit Vorteil auf eine Temperatur zwischen 100°C und 300°C abgekühlt.

Der Kesselwirkungsgrad kann durch Verwendung von sauerstoffangereicherten Gasen oder von reinem Sauerstoff für die Feuerung weiter verbessert werden, da auf diese Weise die entstehende Rauchgasmenge erheblich reduziert werden kann.

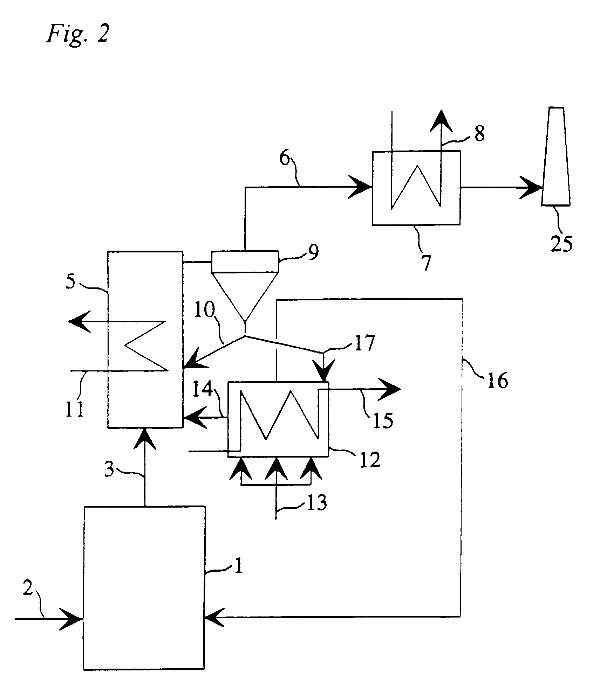

Gemäss Fig. 2, in der die aus Fig. 1 bekannten und gleichbleibenden Teile des Fliesschemas mit den gleichen Bezugsziffern bezeichnet sind, ist die Anlage um einen externen Fliessbettkühler 12 erweitert. Dieser erlaubt, einen Teil der Wärmeabfuhr aus der Nachbrennkammer 5 auszulagern. Ein Teil des im Staubabscheider 9 abgesonderten Feststoffes (oder auch der sämtliche im Staubabscheider 9 anfallende Feststoff) wird über Leitung 17 in den Fliessbettkühler 12 umgeleitet, wo er in einer stationären Wirbelschicht (Fliessbett) durch direkten oder indirekten Wärmeübergang abgekühlt wird (entsprechende Wärmeübertragungsflächen des Fliessbettkühlers 12 sind mit 15 symbolisch bezeichnet) und danach über eine Leitung 14 erneut in die Nachbrennkammer 5 gelangt. In der Nachbrennkammer 5 nimmt dieser Feststoff die Wärme aus den heissen Verbrennungsgasen auf und erwärmt sich auf die in der Nachbrennkammer 5 herrschende Mischtemperatur.

Ein für den Betrieb des Fliessbettkühlers 12 benötigtes Fluidisiergas wird dem Fliessbettkühler 12 über Leitungen 13 zugeführt. Bei der in Fig. 2 dargestellten Auführungsform werden erfindungsgemäss zur Fluidisierung im Fliessbettkühler sauerstoffhaltige Gase eingesetzt, die oberhalb des Fliessbettes wieder abgezogen und über eine Leitung 16 als ein Teil der Primärluft in den Feuerungsraum 1 eingeleitet werden.

Diese Variante ermöglicht eine besonders effiziente Wärmeabfuhr aus der Nachbrennkammer 5. Ausserdem ermöglicht die Anordnung der am stärksten von Korrosionserscheinungen betroffenen Wärmeübertragungsflächen 15 im Fliessbettkühler 12 eine starke Verminderung der Kesselkorrosion. Im Fliessbettkühler 12 werden die Wärmeübertragungsflächen 15 weniger der Korrosion ausgesetzt, da hier die stark korrosiv wirkenden Rauchgase gar nicht zum Einsatz kommen.

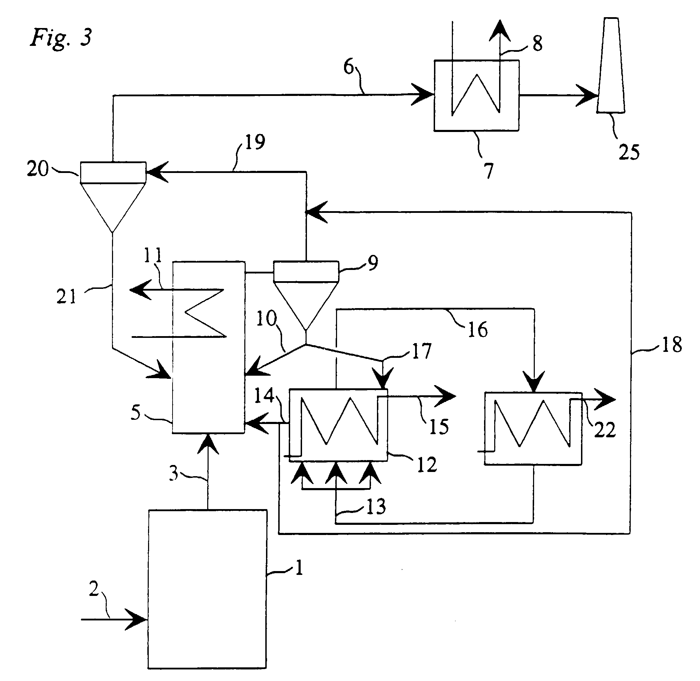

Bei der in Fig. 3 dargestellten Variante wird ein Teil des im Fliessbettkühler 12 abgekühlten Feststoffes über eine Leitung 18 zur weiteren Abkühlung den den Staubabscheider 9 verlassenden Rauchgasen zugegeben. Der Feststoff wird dazu im Rauchgasstrom suspendiert, wo er die Wärme aus dem Rauchgasstrom aufnimmt. Dies kann in einer pneumatischen Förderstrecke 19 oder in einer Schwebegaswärmetauscherstufe 20 geschehen. Vorzugsweise kann für diese Aufgabe ein mehrstufiger Zyklonwärmetauscher eingesetzt werden. Von der Schwebegaswärmetauscherstufe 20 wird der Feststoff über eine Leitung 21 erneut in die Nachbrennkammer 5 zurückgeführt. Durch diese weitere Ausgestaltung kann erfindungsgemäss der nachgeschaltete konventionelle Abhitzekessel 7 weiter verkleinert werden, oder es kann sogar ganz auf ihn verzichtet werden.

Bei dieser Variante wird das für den Betrieb des Fliessbettkühlers 12 benötigte Fluidisiergas, vorzugsweise Luft, wiederum oberhalb des Fliessbettes abgezogen und dann in einem Wärmeaustauscher 22 gekühlt bei gleichzeitiger Wärmegewinnung. Gekühlt und allenfalls entstaubt wird dann das Gas über die Leitungen 13 direkt wieder als Fluidisiergas im Fliessbettkühler 12 eingesetzt.

Bei den in Fig. 2 und 3 dargestellten Verfahrensvarianten kann die Temperatur in der Nachbrennkammer 5 unabhängig vom Betriebszustand der Feuerung genau geregelt werden, indem der Eintrag des im Fliessbettkühler 12 gekühlten Feststoffes geregelt wird. Dies ermöglicht, dass Ammoniak als Reduktionsmittel zur Stickoxidabscheidung in die Nachbrennkammer 5 oder in den Staubabscheider 9 bzw. Zyklon optimal eingeleitet werden kann, und dass die Temperatur so gewählt wird, dass die Stickoxidabscheidung mit minimalem Ammoniakverbrauch durchgeführt werden kann. Vorzugsweise wird der Ammoniak in den Zykloneinlauf eingeleitet.

## Patentansprüche

1. Verfahren zum Verbrennen von Abfallmaterial unter Gewinnung von thermischer Energie, wobei das Abfallmaterial in Gegenwart von Sauerstoff verbrannt wird und danach die Gase aus der Verbrennung (1) einer Nachverbrennung (5) in einer zirkulierenden Wirbelschicht unterzogen werden, und die aus der Wirbelschicht ausgetragenen Feststoffe vom Rauchgas abgetrennt (9) erneut in die Wirbelschicht zurückgeführt werden, wobei mindestens ein Teil der Feststoffe in einem externen Fliessbettkühler (12) unter Wärmerückgewinnung abgekühlt und zurück in die Wirbelschicht geleitet wird, dadurch gekennzeichnet, dass in der Wirbelschicht eine vollständige Nachverbrennung (5) der Gase aus der Verbrennung (1) mit dem in den Gasen vorhandenen Sauerstoff allein stattfindet, und die Temperatur bei der Nachverbrennung (5) durch eine Regelung des in den Fliessbettkühler (12) umgeleiteten Feststoffmengenstroms und dadurch auch durch die Regelung der aus der Nachverbrennung (5) abgeführten Wärmestroms unabhängig vom Betriebszustand der Verbrennung (1) regelbar ist.

2. Verfahren nach Anspruch 1, dadurch gekennzeichnet, dass die Temperatur bei der Nachverbrennung (5) 700°C bis 1100°C beträgt.

3. Verfahren nach Anspruch 1 oder 2, dadurch gekennzeichnet, dass die Gasgeschwindigkeit (Leerrohrgeschwindigkeit) der sauerstoffhaltigen Rauchgase bei der Nachverbrennung (5) 2m/s bis 10m/s beträgt.

4. Verfahren nach einem der Ansprüche 1 bis 3, dadurch gekennzeichnet, dass im Fliessbettkühler (12) zur Fluidisierung sauerstoffhaltige Gase verwendet werden, die oberhalb des Fliessbettes abgezogen und in die Verbrennung (1) als ein Teil der Primärluft geführt werden.

5. Verfahren nach einem der Ansprüche 1 bis 4, dadurch gekennzeichnet, dass im Fliessbettkühler (12) eingesetzte Fluidisiergase, vorzugsweise Luft, oberhalb des Fliessbettes abgezogen und wärmegewinnend abgekühlt wieder direkt als Fluidisiergase im Fliessbettkühler (12) verwendet werden.

6. Verfahren nach einem der Ansprüche 1 bis 5, dadurch gekennzeichnet, dass ein Teil der im Fliessbettkühler (12) abgekühlten Feststoffe dem nach der Nachverbrennung (5) von Feststoffen befreiten Rauchgasstrom zugemischt wird, diesen abkühlt und anschliessend in mindestens einer Schwebegaswärmetauscherstufe (20) abgeschieden wieder der Nachverbrennung (5) zugeführt wird.

7. Verfahren nach einem der Ansprüche 1 bis 6, dadurch gekennzeichnet, dass die Feststoffe der Wirbelschicht mindestens teilweise durch aus der Verbrennung (1) stammende Flugasche gebildet sind.

8. Verfahren nach einem der Ansprüche 1 bis 7, dadurch gekennzeichnet, dass in die Nachverbrennung (5) zur Stickoxidentfernung Reduktionsmittel, vorzugsweise Ammoniak, eingeleitet werden.

9. Verfahren nach einem der Ansprüche 1 bis 7, dadurch gekennzeichnet, dass bei der Entfernung der Feststoffe (9) nach der Nachverbrennung zur Stickoxidentfernung Reduktionsmittel, vorzugsweise Ammoniak, eingeleitet werden.

10. Verfahren nach einem der Ansprüche 1 bis 9, dadurch gekennzeichnet, dass man die Rauchgase nach der Entfernung der Feststoffe (9) in einem konventionellen Abhitzekessel (7) auf eine Temperatur zwischen 100°C und 300°C unter Wärmegewinnung abkühlt.

11. Verfahren nach einem der Ansprüche 1 bis 10, dadurch gekennzeichnet, dass die Verbrennung (1) mit einem Sauerstoffverhältnis von 1.0 bis 3.0, bezogen auf den theoretischen Mindestbedarf für eine vollständige Verbrennung, betrieben wird.

12. Verfahren nach einem der Ansprüche 1 bis 10, dadurch gekennzeichnet, dass die Verbrennung (1) mit mit Sauerstoff angereicherter Luft betrieben wird.

13. Vorrichtung zum Durchführen des Verfahrens nach Anspruch 1, mit einem Feuerungsraum (1), einer an den Feuerungsraum (1) angeschlossenenen, als ein Wirbelschichtreaktor ausgebildeten Nachbrennkammer (5), der ein Staubabscheider (9) nachgeschaltet ist, wobei eine direkte Rückverbindung (10) des Staubabscheiders (9) mit der Nachbrennkammer (5) sowie eine über einen externen Fliessbettkühler (12) zur Nachbrennkammer (5) führende Rückverbindung (17, 14) vorhanden ist zum Rezirkulieren der im Staubabscheider abgeschiedenen Feststoffe, dadurch gekennzeichnet, dass die Nachbrennkammer (5) zur vollständigen Nachverbrennung der in die Nachbrennkammer (5) aus dem Feuerungraum (1) eingeleiteten Gase vorgesehen ist, und der über den externen Fliessbettkühler (12) rezirkulierte Feststoffmengenstrom regelbar ist.

14. Vorrichtung nach Anspruch 13, dadurch gekennzeichnet, dass die Wände des Wirbelschichtreaktors als Wärmeübertragungsflächen (6) ausgestaltet sind.

15. Vorrichtung nach Anspruch 13 oder 14, gekennzeichnet, durch eine Verbindung (6) zwischen dem Staubabscheider (9) und einem konventionellen Abhitzekessel (7) zur Kühlung der den Staubabscheider (9) verlassenden Rauchgase.

16. Vorrichtung nach einem der Ansprüche 13 bis 15, gekennzeichnet durch mindestens eine dem Staubabscheider (9) nachgeschaltete Schwebegaswärmetauscherstufe (20), wobei in eine den Staubabscheider (9) mit der Schwebegaswärmetauscherstufe (20) verbindende Rauchgasförderstrecke (19) eine einen Teil des im Fliessbettkühler (12) gekühlten Feststoffes zuführende Leitung (18) mündet, wobei eine Rückverbindung (21) der Schwebegaswärmetauscherstufe (20) mit der Nachbrennkammer (5) vorhanden ist zum Rezirkulieren der in der Schwebegaswärmetauscherstufe (20) abgeschiedener Feststoffe.

17. Vorrichtung nach einem der Ansprüche 13 bis 16, gekennzeichnet durch eine den Fliessbettkühler (12) mit dem Feuerungsraum (1) verbindende Leitung (16) zum Zuführen von den Fliessbettkühler (12) verlassenden, sauerstoffhaltigen Gase als Teil der Primär-Verbrennungsluft in den Feuerungsraum (1).

18. Vorrichtung nach einem der Ansprüche 13 bis 16, gekennzeichnet durch einen zusätzlichen Wärmeaustauscher (22), der über Leitungen (16,13) mit dem Fliessbettkühler (12) verbunden ist zum Kühlen und Rezirkulieren von den Fliessbettkühler (12) verlassenden Fluidisiergase.

## Claims

1. Process for the combustion of waste material with production of thermal energy, the waste material being burnt in the presence of oxygen and the gases from the combustion (1) then being subjected to an afterburning (5) in a circulating fluidized bed, and the solids, discharged from the fluidized bed, separated off (9) from the flue gas being recycled to the fluidized bed, at least some of the solids being cooled in an external fluidized-bed cooler (12) with heat recovery and being passed back to the fluidized bed, characterized in that, in the fluidized bed, complete afterburning (5) of the gases from the combustion (1) with the oxygen present in the gases alone takes place, and the temperature in the afterburning (5) can be controlled independently of the operating state of the combustion (1) by controlling the solids mass flow rate diverted into the fluidized-bed cooler (12) and by this means, also, by controlling the rate of heat removed from the afterburning (5).

2. Process according to Claim 1, characterized in that the temperature in the afterburning (5) is 700°C to 1100°C.

3. Process according to Claim 1 or 2, characterized in that the gas velocity (superficial velocity) of the oxygen-containing flue gases is 2 m/s to 10 m/s in the afterburning (5).

4. Process according to one of Claims 1 to 3, characterized in that oxygen-containing gases are used for fluidization in the fluidized-bed cooler (12), which oxygen-containing gases are taken off above the fluidized bed and are conducted to the combustion (1) as some of the primary air.

5. Process according to one of Claims 1 to 4, characterized in that fluidizing gases, preferably air, used in the fluidized-bed cooler (12) are taken off above the fluidized bed and, cooled with heat recovery, are reused directly as fluidizing gases in the fluidized-bed cooler (12).

6. Process according to one of Claims 1 to 5, characterized in that some of the solids cooled in the fluidized-bed cooler (12) are added to the flue gas stream freed from solids downstream of the afterburning (5), cool this fluid gas stream, and, separated off in at least one suspension-type heat exchanger stage (20), are then recirculated to the afterburning (5).

7. Process according to one of Claims 1 to 6, characterized in that the solids of the fluidized bed are at least in part formed by the fly-ash originating from the combustion (1).

8. Process according to one of Claims 1 to 7, characterized in that reducing agents, preferably ammonia, are introduced into the afterburning (5) for nitrogen oxide removal.

9. Process according to one of Claims 1 to 7, characterized in that reducing agents, preferably ammonia, are introduced, for nitrogen oxide removal, in the removal of the solids (9) downstream of the afterburning.

10. Process according to one of Claims 1 to 9, characterized in that the flue gases, downstream of the removal of the solids (9), are cooled, with heat recovery, in a conventional waste-heat boiler (7) to a temperature between 100°C and 300°C.

11. Process according to one of Claims 1 to 10, characterized in that the combustion (1) is operated with an oxygen ratio of 1.0 to 3.0, based on the theoretical minimum requirement for complete combustion.

12. Process according to one of Claims 1 to 10, characterized in that the combustion (1) is operated with oxygen-enriched air.

13. Apparatus for carrying out the process according to Claim 1, having a furnace chamber (1), an afterburning chamber (5) which is connected to the furnace chamber (1) and is designed as a fluidized-bed reactor, downstream of which is connected a dust separator (9), a direct reconnection (10) of the dust separator (9) to the afterburning chamber (5) as well as a reconnection (17, 14) which leads to the afterburning chamber (5) via an external fluidized-bed cooler (12) being present to recirculate the solids separated off in the dust separator, characterized in that the afterburning chamber (5) is provided for the complete afterburning of the gases fed into the afterburning chamber (5) from the furnace chamber (1), and the solids mass flow rate recirculated via the external fluidized-bed cooler (12) can be controlled.

14. Apparatus according to Claim 13, characterized in that the walls of the fluidized-bed reactor are designed as heat-transfer surfaces (6).

15. Apparatus according to Claim 13 or 14, characterized by a connection (6) between the dust separator (9) and a conventional waste-heat boiler (7) for cooling the flue gases leaving the dust separator (9).

16. Apparatus according to one of Claims 13 to 15, characterized by at least one suspension-type heat exchanger stage (20) connected downstream of the dust separator (9), a line (18) feeding some of the solids cooled in the fluidized-bed cooler (12) opening into a flue gas conveying section (19) connecting the dust separator (9) to the suspension-type heat exchanger stage (20), a reconnection (21) of the suspension-type heat exchanger stage (20) with the afterburning chamber (5) being present to recirculate the solids separated off in the suspension-type heat exchanger stage (20).

17. Apparatus according to one of Claims 13 to 16, characterized by a line (16) connecting the fluidized-bed cooler (12) to the furnace chamber (1) for feeding oxygen-containing gases leaving the fluidized-bed cooler (12) into the furnace chamber (1) as part of the primary combustion air.

18. Apparatus according to one of Claims 13 to 16, characterized by an additional heat exchanger (22) which is connected via lines (16, 13) to the fluidized-bed cooler (12) for cooling and recirculating fluidizing gases leaving the fluidized-bed cooler (12).

## Revendications

1. Procédé de combustion de déchets avec récupération d'énergie thermique, les déchets étant incinérés en présence d'oxygène, les gaz issus de la combustion (1) étant ensuite soumis à une post-combustion (5) dans une couche tourbillonnante ou lit fluidisé en circulation, et les solides extraits du lit fluidisé étant séparés des gaz de fumées (9) et de nouveau retournés au lit fluidisé, au moins une partie des solides étant refroidis avec récupération de chaleur dans un refroidisseur externe à lit fluidisé (12) et retourné dans le lit fluidisé, caractérisé en ce que, dans le lit fluidisé, est effectuée une post-combustion (5) complète des gaz issus de la combustion (1), avec pour seul oxygène celui existant dans ces gaz, la température lors de cette post-combustion (5) étant réglable au moyen d'une régulation du débit massique de solide dérivé dans le refroidisseur à lit fluidisé (12) et, de ce fait, également par la régulation du flux thermique évacué de la post-combustion (5), indépendamment de l'état de fonctionnement de la combustion (1).

2. Procédé selon la revendication 1, caractérisé en ce que la température lors de la post-combustion (5) est de 700 à 1100°C

3. Procédé selon la revendication 1 ou 2, caractérisé en ce que la vitesse (vitesse dans un tube vide) des gaz de fumées contenant de l'oxygène lors de la post-combustion (5) est de 2 m/s à 10 m/s.

4. Procédé selon l'une des revendications 1 à 3, caractérisé en ce que, dans le refroidisseur à lit fluidisé (12) sont utilisés, pour la fluidisation, des gaz contenant de l'oxygène, qui sont extraits au-dessus du lit fluidisé et sont introduits dans la combustion (1) comme une partie de l'air primaire.

5. Procédé selon l'une des revendications 1 à 4, caractérisé en ce que les gaz de fluidisation utilisés dans le refroidisseur à lit fluidisé (12), de préférence de l'air, sont extraits au-dessus du lit fluidisé et sont refroidis avec récupération de chaleur et réutilisés directement comme gaz de fluidisation dans ce refroidisseur (12).

6. Procédé selon l'une des revendications 1 à 5, caractérisé en ce qu'une partie des solides refroidis dans le refroidisseur à lit fluidisé (12) est ajoutée en mélange au flux de gaz de fumées débarrassé des solides après la post-combustion (5), en refroidissant ce flux de gaz de fumées, puis de nouveau amenée à la post-combustion (5), en passant dans au moins un étage (20) d'un dispositif de préchauffage par mise en suspension dans ces gaz.

7. Procédé selon l'une des revendications 1 à 6, caractérisé en ce que les solides du lit fluidisé sont constitués au moins partiellement par des cendres volantes provenant de la combustion (1).

8. Procédé selon l'une des revendications 1 à 7, caractérisé en ce que des agents de réduction, de préférence de l'ammoniaque, sont introduits dans la post-combustion (5) dans le but de d'éliminer les oxydes d'azote.

9. Procédé selon l'une des revendications 1 à 7, caractérisé en ce que, lors de l'élimination des solides (9) après la post-combustion, on introduit un agent de réduction, de préférence de l'ammoniac, pour éliminer les oxydes d'azote.

10. Procédé selon l'une des revendications 1 à 9, caractérisé en ce que l'on refroidit les gaz de fumées, après élimination des solides (9), dans une chaudière de récupération (7) classique, à une température comprise entre 100°C et 300°C, en procédant à une récupération de la chaleur.

11. Procédé selon l'une des revendications 1 à 10, caractérisé en ce que la combustion (1) est conduite avec un taux d'oxygène de 1,0 à 3,0, en se référant à la consommation minimale théorique pour l'obtention d'une combustion complète.

12. Procédé selon l'une des revendications 1 à 10, caractérisé en ce que la combustion (1) est conduite avec de l'air enrichi en oxygène.

13. Dispositif de mise en oeuvre du procédé selon la revendication 1, avec une chambre de combustion (1), une chambre de post-combustion (5) raccordée au foyer (1), réalisée sous la forme de réacteur à lit fluidisé, en aval de laquelle est monté un séparateur à poussières (9), où une conduite de retour direct (10) du séparateur à poussières (9) menant à la chambre de post-combustion (5), ainsi qu'une conduite de retour (17, 14), menant à la chambre de post-combustion (5) en passant par un refroidisseur externe à lit fluidisé (12), sont prévues pour assurer la recirculation des solides séparés dans le séparateur à poussières, caractérisé en ce que la chambre de post-combustion (5) est prévue pour une post-combustion complète des gaz introduits dans cette chambre et provenant de la chambre de combustion (1), le débit massique de solides, recirculés en passant par le refroidisseur externe (12) étant réglable.

14. Dispositif selon la revendication 13, caractérisé en ce que les parois du réacteur à lit fluidisé sont réalisés sous la forme de surfaces de transfert thermique (6).

15. Dispositif selon la revendication 13 ou 14, caractérisé par une liaison (6) entre le séparateur à poussières (9) et une chaudière de récupération (7) classique, pour refroidir les gaz de fumées quittant le séparateur à poussières (9).

16. Dispositif selon l'une des revendications 13 à 15, caractérisé par au moins un étage (20) d'un dispositif de préchauffage par mise en suspension dans les gaz, installé en aval du séparateur à poussières (9), où, dans une veine de transport de gaz de fumées (19), assurant la liaison entre le séparateur à poussières (9) et l'étage (20) de dispositif de préchauffage par mise en suspension dans ces gaz, débouche une conduite (18) amenant une partie des solides refroidis dans le refroidisseur à lit fluidisé (12), une conduite de retour (21) de l'étage (20) avec la chambre à post-combustion (5) étant prévue pour recirculer les solides séparés dans l'étage (20) de dispositif de préchauffage par mise en suspension dans ces gaz.

17. Dispositif selon l'une des revendications 13 à 16, caractérisé par une conduite (16) reliant le refroidisseur à lit fluidisé (12) à la chambre de combustion (1) pour amener les gaz contenant de l'oxygène, quittant le refroidisseur (12) comme une partie de l'air primaire dans la chambre de combustion (1).

18. Dispositif selon l'une des revendications 13 à 16, caractérisé par un échangeur de chaleur (22) supplémentaire, relié par des conduites (16, 13) au refroidisseur à lit fluidisé (12) pour refroidir et faire recirculer les gaz de fluidisation quittant ce refroidisseur (12).
